# EUROPÄISCHE PATENTSCHRIFT

(11) **EP 2 342 058 B1**
(45) Veröffentlichungstag und Bekanntmachung des Hinweises auf die Patenterteilung: **20.02.2019**
(21) Anmeldenummer: 09783987.2
(22) Anmeldetag: 13.10.2009
(51) Int. Cl.: B29C 45/16

(54) **FORMTEIL ZUM AN- ODER EINBAU IN EIN HAUSHALTSGERÄT UND VERFAHREN**
MOULDED PIECE FOR ASSEMBLY ON OR IN A DOMESTIC APPLIANCE AND METHOD
PIÈCE MOULÉE À MONTER SUR OU DANS UN APPAREIL ÉLECTROMÉNAGER ET PROCEDE

(30) Priorität: 14.10.2008 DE 102008042815
(43) Veröffentlichungstag der Anmeldung: 13.07.2011
(73) Patentinhaber: BSH Hausgeräte GmbH, 81739 München (DE)
(72) Erfinder: BASSLER, Daniel, 73433 Aalen (DE); POIDINGER, Albert, 89567 Sontheim (DE)
(86) Internationale Anmeldenummer: PCT/EP2009/063361
(87) Internationale Veröffentlichungsnummer: WO 2010/043626

(56) Entgegenhaltungen:
- DE-A1- 2 835 595
- JP-A- 7 127 217
- US-A1- 2004 022 988
- US-A1- 2006 150 371
- JAROSCHEK CHRISTOF: "SPRITZGIESSEN FÜR PRAKTIKER" 1. Januar 2003 (2003-01-01), CARL HANSER VERLAG , XP002560496 Seite 185

## Beschreibung

Die Erfindung betrifft ein Formteil zum An- oder Einbau in ein Haushaltsgerät mit einem Überzug zumindest auf einer Sichtseite, ein Verfahren zu dessen Herstellung, und ein mit dem Formteil ausgestattetes Haushaltsgerät.

Derartige Formteile, wie z.B. Griffhalter, Handgriffe, Türabschlussleisten und sonstige Beschläge oder Dekorelemente, die insbesondere an Frontseiten von Haushaltsgeräten wie Kühlschränken angebracht sind, sind bereits bekannt. Sie haben einerseits die Aufgabe, dauerhaft ihre Funktion zu erfüllen, das heißt, trotz angreifender Kräfte und Temperaturunterschieden stabil zu bleiben. Andererseits wird verlangt, dass die Formteile ästhetisch gefällig sind, das heißt, in Design und/oder Farbe entweder an das betreffende Gerät gut angepasst sind oder sich von diesem optisch auffallend aber gefällig unterscheiden. Hiervon ist oftmals der Verkaufserfolg abhängig, da nicht nur technisch gut funktionierende, sondern auch ästhetisch gelungene Haushaltsgeräte gewünscht werden.

Es ist bekannt, Formteile, z.B. Griffhalter, nach diesen Gesichtspunkten komplett aus einem Material herzustellen, das sowohl die Festigkeitsdauereigenschaften als auch die ästhetischen Eigenschaften an der Außen- beziehungsweise Sichtseite aufweist. Dabei hat sich jedoch gezeigt, dass die Formteile besonders massiv ausgebildet werden müssen damit der nach ästhetischen Gesichtspunkten ausgewählte Werkstoff auch die erforderliche Festigkeitseigenschaften aufweist. Von Nachteil bei dieser Einstückausbildung ist auch der Umstand, dass an der Oberfläche oftmals unerwünschte Fließlinien zu sehen sind, welche beim Spritzgießen und dergleichen Herstellungsverfahren auftreten.

Sofern die Materialstärke auch aus ästhetischen Gründen bei derartigen Materialien nicht zu groß gewählt werden soll, ist es auch bekannt, Handgriff mit Metalleinlagen zu versehen. Dies verursacht jedoch einen erhöhten Herstellungsaufwand und auch höhere Herstellungskosten.

Darüber hinaus ist es bekannt, Handgriffe, Zierleisten und dergleichen an der Oberfläche zu lackieren. Die Lackierkosten sind jedoch vielfach unerwünscht hoch und die Lackierung springt gelegentlich beim Anstoßen von Kräften von der Unterlage ab.

US 2004/022988 A1 zeigt ein Formteil zum An- oder Einbau in ein Haushaltsgerät, welches zumindest auf einer Sichtseite mit einem Überzug versehen ist, der aus einem Kunststoff enthaltenden Material besteht.
Aus dem Buch "Spritzgießen für Praktiker" (Jaroschek Christof, Carl Hanser Verlag, 1. Januar 2003) ist bekannt, Fließbremsen in ein Angusssystem oder in eine Kavität des Spritzgusswerkzeugs zu integrieren.
Der Erfindung liegt die Aufgabe zu Grunde, ein Formteil zum An- oder Einbau in ein Haushaltsgerät der eingangs genannten Gattung dahingehend zu verbessern, dass es bei einfacher und kostengünstiger Herstellung sowohl die technischen Stabilitätseigenschaften als auch die ästhetischen Eigenschaften der äußeren Erscheinungsform aufweist und auch relativ dünnwandig hergestellt werden kann.
Diese Aufgabe löst die Erfindung durch ein Formteil gemäß Anspruch 1, ein Herstellungsverfahren gemäß Anspruch 13 sowie ein Haushaltsgerät gemäß Anspruch 12. Vorteilhafte Ausbildungen sind in den Unteransprüchen beansprucht.
Das erfindungsgemäß Formteil ist zumindest auf einer Sichtseite mit einem Überzug versehen, wobei der Überzug Kunststoff enthält und durch ein Spritzgussverfahren auf einen der Form des Formteils im Wesentlichen entsprechenden Vorformling aufgebracht ist. In diesem Zusammenhang bedeutet "im Wesentlichen entsprechend", dass der Vorformling an der Sichtseite um die Dicke des gewünschten Überzugs dünner ist als das fertige Formteil. Der Vorformling ist vorzugsweise jedoch dazu ausgelegt, die mechanischen Kräfte aufzunehmen, denen das Formteil standhalten muss. Der Überzug dient dagegen bevorzugt ausschließlich Dekorzwecken, daher besteht er z.B. aus einem hochwertigen Dekor- oder Designkunststoff.
Die Sichtseite kann z.B. die Frontseite des Formteils sein, welches im eingebauten Zustand dem Benutzer zugewandt ist. Der Überzug kann auch das gesamte Formteil bedecken.

Auf diese Weise erlaubt die Erfindung eine Kostenoptimierung durch die Trennung von Funktionskunststoff (im Vorformling) und Dekorkunststoff (im Überzug). Insbesondere muss das Material des Vorformlings nicht nach ästhetischen Gesichtspunkten, sondern allein nach Formbarkeit und Festigkeit sowie anderen technischen Eigenschaften ausgewählt werden; hierfür können z.B. preisgünstige Kunststoffe verwendet werden. Für die Dekorschicht, das heißt den Überzug, der verhältnismäßig dünn ausgebildet ist, können dagegen auch höherpreisige Kunststoffe verwendet werden, die den ästhetischen Wünschen der Kunden besser entsprechen.

Ein weiterer Vorteil der Erfindung besteht darin, dass Vorformlinge hergestellt und in größerer Anzahl auf Lager gehalten werden und erst nach Eingang von Kundenwünschen mit dem entsprechenden Dekor, darunter Farbnuancen, Metallglanz oder dergleichen, kurz vor dem Einbau fertig gestellt werden können. Insofern ist ein schneller und auch einfacher Wechsel von Design und Farbe möglich. Falls Ausschuss anfällt, kann dieser im Unterschied zu lackierten Teilen durch Verarbeitung zu Regranulat wieder verwendet werden.

Für der Herstellung des Vorformlings wird vorzugsweise ABS (Acrylnitrid-Butadien-StyrolCopolymerisat) oder PA (Polyamid), insbesondere PA6 verwendet. Dabei kann Regranulat verwendet werden, was die Herstellungskosten vermindert. Dabei handelt es sich um Recyclingmaterial aus Ausschussteilen. Erfindungsgemäß ist der Vorformling ein Spritzgussteil und wird daher auch Vorspritzling genannt. Der Vorformling kann auch ein Mehrkomponenten-Spritzgussteil sein. Ferner kann der Vorformling eine Metalleinlage aufweisen, oder auch komplett aus Metall bestehen.

Der Vorspritzling wird mit einer den Überzug bildenden spritzbaren Kunststoffmasse überspritzt. Das Überzugsmaterial besteht bevorzugt aus dem gleichen Kunststoff wie der Vorformlings, was die Haftung am Vorformling begünstigt. Alternativ kann auch ein anderer Kunststoff zum Einsatz kommen. In diesem Fall kann es vorteilhaft sein, die Oberfläche des Vorformlings vor dem Überspritzen vorzubehandeln, z.B. durch Ätzen aufzurauen, um die Haftung der Dekorschicht zu verbessern.

Der Überzug ist insbesondere als Dekorschicht in Farbe (uni- oder mehrfarbig), fluoreszierend und/oder mit Metallglanzeffekt ausgebildet. Ein mehrfarbiger Überzug kann durch ein 30 Mehrkomponenten-Spritzgussverfahren beim Überspritzen erreicht werden.
Der Überzug sollte eine Schichtdicke zwischen 0,5 mm und 2,0 mm, insbesondere von ca. 0,8 mm bis 1,2 mm aufweisen.
Das Formteil kann ein Beschlag für ein Haushaltsgerät sein, insbesondere ein Griffhalter, ein Handgriff, eine Türabschlussleiste oder ein Scharnierelement, oder Teil der Verkleidung eines Haushaltsgeräts, oder ein Teil der Innenausstattung eines Haushaltsgeräts, insbesondere Kältegeräts, wie z.B. eine Zierleiste, ein Türabstellfach, eine Dekorleiste für eine Kühlgutschale, einen Türabstellfach oder für einen Zwischenboden.
Die Erfindung ist auch auf ein Haushaltsgerät gerichtet, in das ein erfindungsgemäßes Formteil eingebaut ist, insbesondere ein Haushalts-Kältegerät, z.B. Kühlschrank oder Gefrierschrank, eine Waschmaschine, ein Wäschetrockner oder ein Geschirrspüler.
Gemäß dem erfindungsgemäßen Verfahren wird zuerst ein Vorformling insbesondere als Vorspritzling hergestellt, der der Form des gewünschten Formteils im Wesentlichen entspricht. Zu diesem Zweck wird bevorzugt Kunststoff in eine dem Vorspritzling entsprechende Spritzform eingespritzt.
Danach wird der Vorformling in einen Formhohlraum einer Spritzform eingesetzt, derart dass zumindest auf einer Seite des Vorformlings zwischen dem Formhohlraum und dem Vorformling ein Freiraum für einen Überzug verbleibt. Die Spritzform hat die Form des fertigen Formteils. Daraufhin wird in einem Spritzgussschritt Kunststoffmasse für den Überzug in den Freiraum eingespritzt. Nach der Verfestigung des Überzugs wird der mit dem Überzug versehen Vorformling, das fertige Formteil, aus der Spritzform entfernt.
Der Vorformling ist vorzugsweise besonders dazu optimiert, in einem Spritzgussschritt mit einem Kunststoff überspritzt zu werden. Dazu weist der Vorformling erfindungsgemäß zumindest eine Fließhilfe und/oder zumindest eine Fließbremse auf, welche für eine gleichmäßige Fließfront während des Überspritzens mit einem Kunststoff sorgen. Um Fließlinien und Bindenähte im fertigen Formteil zu vermeiden, sollte die Fließfront beim Überspritzen nämlich gleichmäßig sein, also gerade oder konvex geformt. Dies kann dadurch erreicht werden, dass der Vorformling und die beim Überspritzen verwendete Form aufeinander abgestimmt sind, um die Fließfront zu optimieren. Hierzu sind z.B. Fließhilfen und Fließ- bremse vorgesehen, dies sind bevorzugt Merkmale der Form des Vorformlings. Eine Fließhilfe ist erfindungsgemäß ein Abschnitt des Vorformlings, an welchem der Abstand zwischen Vorformling und Spritzgussform größer ist als in den benachbarten Abschnitten, d.h. der Überzug wird hier eine dickere Wandstärke haben. Dadurch fließt der Kunststoff während des Überspritzens hier schneller. Umgekehrt ist eine Fließbremse ein Abschnitt des Vorformlings, an welchem der Abstand zwischen Vorformling und Spritzgussform kleiner ist als in den benachbarten Abschnitten, so dass der Fluss des flüssigen Kunststoffs gebremst wird. Durch Versuche sollte die Form des Vorformlings derart auf die zum Überspritzen verwendete Spritzgussform angepasst werden, dass der Überzug gleichmäßig und ohne Fließlinien aufgebracht wird.

Ausführungsbeispiele für die Erfindung sind in der Zeichnung im Folgenden schematisch näher erläutert. Dabei zeigen:
- Fig. 1: einen Querschnitt durch ein erfindungsgemäßes, als Handgriff ausgebildetes Formteil;
- Fig. 2: eine Draufsicht auf die Sicht- oder Frontseite F des Handgriffs der Fig. 2;
- Fig. 3: einen Teil-Querschnitt durch ein Spritzwerkzeug für die Fertigstellung des Formteils;
- Fig. 3a: eine Teil-Aufsicht auf den Formhohlraum im Moment des Eindringens von Spritzgussmasse in diesen in der Fließrichtung FR;
- Fig. 4: eine perspektivische Ansicht eines Handgriffs;
- Fig. 5: eine perspektivische Ansicht von zwei Handgriffen im an Kühlschranktüren angebrachten Zustand;
- Fig. 6: eine perspektivische Ansicht eines Türgriffs,
- Fig. 6a, 6b: perspektivische Ansichten von Teilen des Türgriff der Fig. 6;
- Fig. 7: der Türgriff der Fig. 6 im an eine Kühlschranktür angebrachten Zustand.

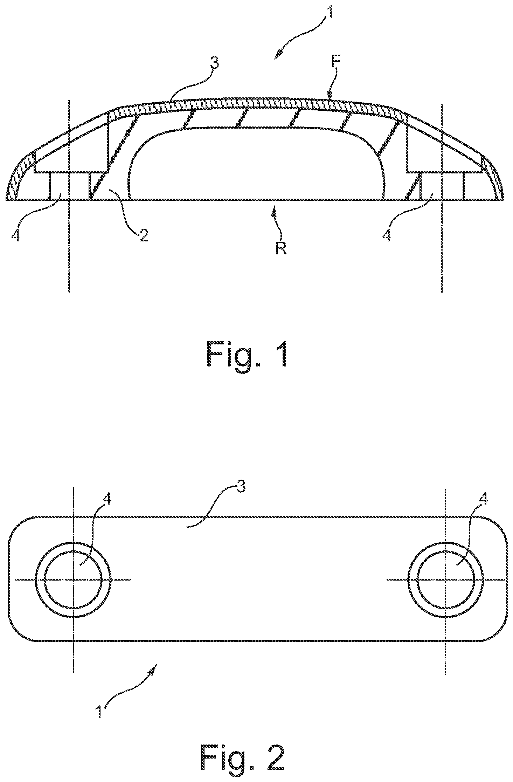

Fig. 1 zeigt als Beispiel für ein erfindungsgemäßes Formteil 1 einen Handgriff. Der Handgriff weist einen Vorformling 2 aus ABS Kunststoffmaterial auf. Dieses Material wird nach den technischen Notwendigkeiten ausgewählt und vorab in einer dem Handgriff im Wesentlichen entsprechenden Spitzform spritzgegossen. Der als Vorspritzling ausgebildete Vorformling 2 ist an der nach außen in Erscheinung tretenden Oberfläche, das heißt der Sicht- oder Frontseite F, mit einem als Dekorschicht ausgebildeten Überzug 3 ebenfalls aus ABS versehen; die Dekorschicht ist durch ein Spritzgussverfahren auf den Vorspritzling aufgebracht.

Die Rückseite R dient zum Befestigen des Handgriffs an beispielsweise der Vorderwand einer Kühlschranktür. Zu diesem Zweck sind die Wände des Formteils mit Bohrungen 4 zum Hindurchstecken von beispielsweise Schrauben versehen.

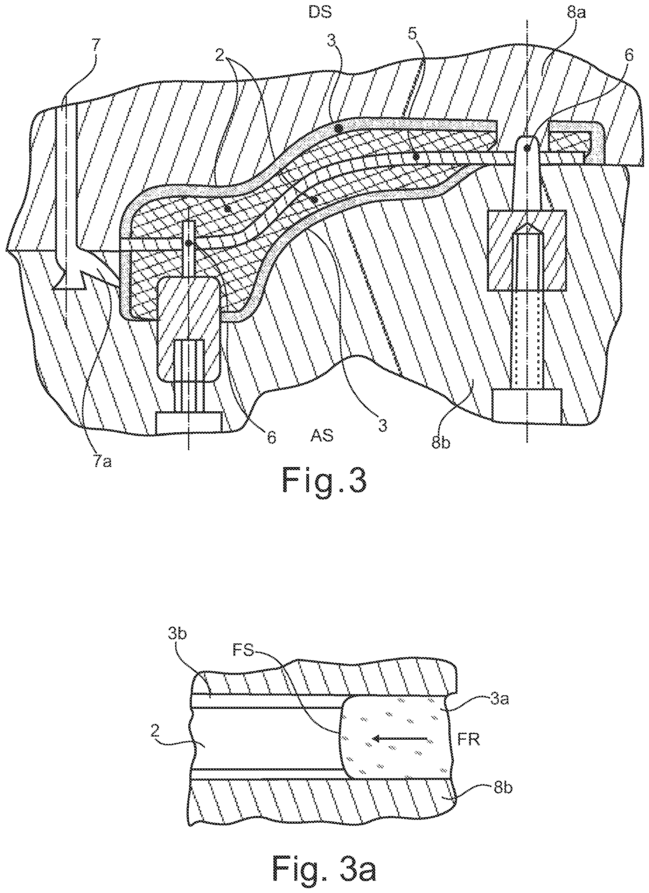

Anhand der Schnittzeichnung eines Spritzgusswerkzeugs der Fig. 3 lässt sich eine bevorzugte Herstellungsart des Formteils 1 erläutern: Die Spritzform umfasst die beiden Formhälften 8a, 8b, die zwischen sich einen Formhohlraum definieren. In diesen Formhohlraum ist der Vorformling 2 derart eingesetzt, dass sich zwischen dessen Außenseite und den Formhälften 8a und 8b spaltförmige Freiräume 3 befinden. Dabei gehört die Formhälfte 8b zur Auswerferseite AS des Werkzeugs, während die Formhälfte 8a zur Düsenseite 8 DS des Werkzeugs gehört. Der Vorformling 2 hat eine Metalleinlage 5, und besteht im Übrigen aus Kunststoff, z.B. ABS (kreuzschraffierte Teile). Die beiden Haltedorne 6 halten den Vorformling 2 in der Spritzform in der richtigen Position.

Beim erfindungsgemäßen Überspritzen der Dekorschicht wird über den Einspritzkanal 7 Kunststoff-Spritzmasse aus einem Dekorkunststoff eingespritzt, wodurch der Vorformling 2 mit dem Überzug 3 in Form einer Dekorschicht zumindest teilweise umgeben wird.

In Fig. 3a ist ein Ausschnitt einer gewünschten Fließfront beim Überspritzen mit dem Dekorkunststoff dargestellt. Der Vorformling 2, bzw. der Freiraum 2 zwischen dem Vorformling 2 und der Spritzform 8a, 8b, ist derart ausgebildet, dass die Spritzmasse 3a für den Überzug 3 in Fließrichtung FR an der Frontseite FS leicht konvex, aber nicht konkav gekrümmt ist, wenn sich diese in dem Freiraum 3b in Fließrichtung FR zum Ausfüllen des Freiraums 3b vorwärts bewegt. Durch diese leicht konvexe oder gerade Fließfront der Spritzmasse 3a werden keine Fließlinien oder Bindenähte erzeugt, die durch ein Zusammenfließen mehrere "Zungen" der Spritzmassen verursacht werden könnten. Am Vorspritzling außen vorgesehene Fließhilfen z.B. in Form von Vertiefungen oder Kanäle, die in der Fließrichtung verlaufen, begünstigen das Entlangströmen, während Abschnitte dünnerer Wandstärke oder Barrieren die Fließgeschwindigkeit abbremsen. Es wird Wert auf eine gleichmäßige Fließfront gelegt.

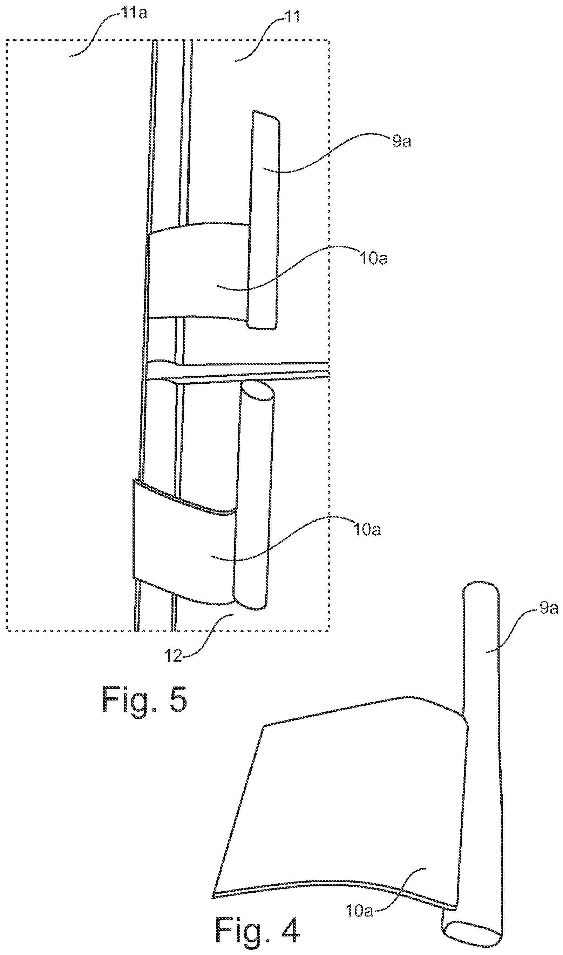

In Fig. 4 ist als Beispiel für ein erfindungsgemäßes Formteil ein Türgriff für ein Haushalts-Kältegerät, insbesondere einen Kühlschrank in Standbauweise, dargestellt. Es handelt sich um einen Hebelgriff mit einer Griffstange 9a und einem Haltebügel 10a. Der Hebelgriff ist gemäß Fig. 5 an einer seitlichen Stirnwand von Kühlschranktüren 11, 12 angebracht. Die Einzelheiten der Befestigung sind hier nicht dargestellt. Bei diesem Ausführungsbeispiel sind sowohl der Hebelgriff 9a als auch der Befestigungsteil 10a des Anbauteils erfindungsgemäß mit einem Dekorüberzug aus beispielsweise Polyamid 6 mit Metallglanzpartikeln versehen.

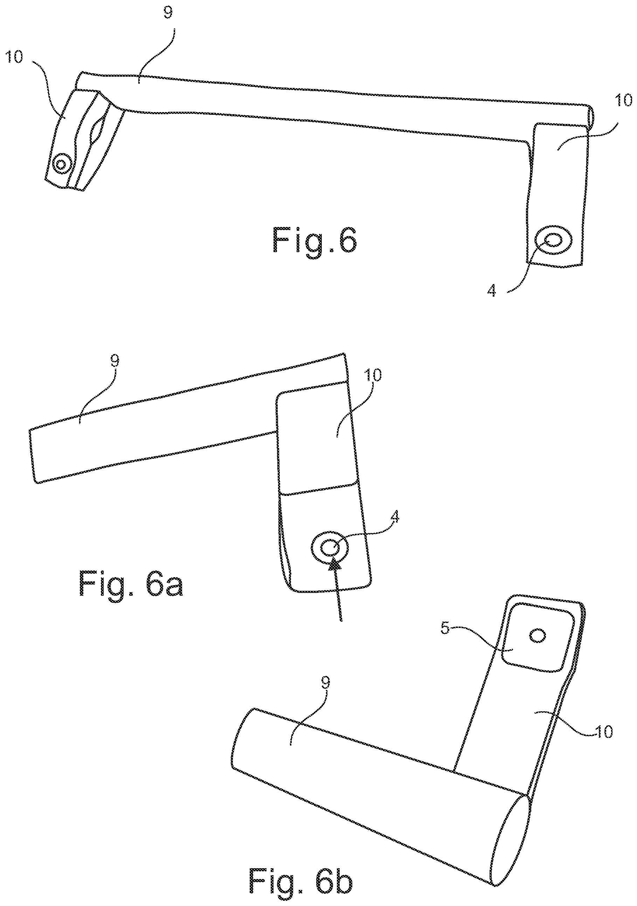

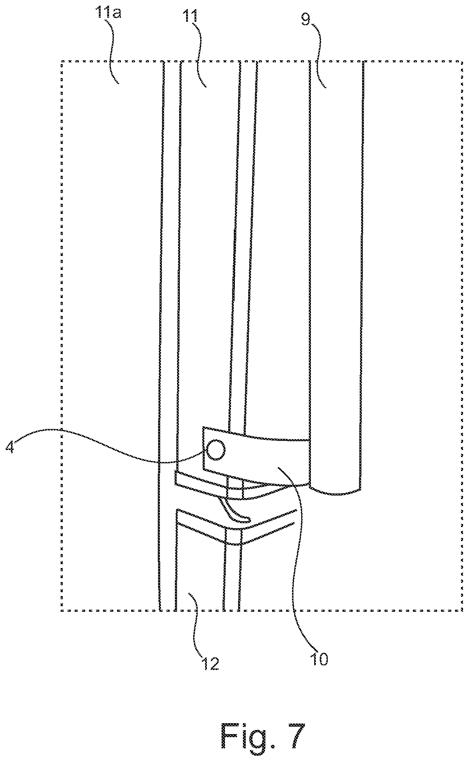

In den Figuren 6 und 7 ist eine andere Art von Türgriff, nämlich ein sog. vertikaler Griff, dargestellt, der ebenfalls z.B. bei Haushalts-Kältegeräten in Standbauweise verwendet wird. Der vertikale Griff 8 ist an seinen beiden Enden mit radial abstehenden Befestigungselementen 10 versehen. Dabei enthält der nicht sichtbare Vorformling eine Metalleinlage 5 an der Befestigungsstelle, durch welche zum Befestigen an der Seitenleiste 11 der Kühlschranktür eine Schraube 4 an beiden Befestigungselementen 10 geführt ist. Auch hier sind der langgestreckte rohrförmige Haltegriff 9 sowie beide Befestigungsteile 10 jedenfalls an den nach außen sichtbaren Seiten mit dem Dekor-Überzug versehen, der durch Überspritzen eines entsprechenden Vorspritzlings in einer Spritzform aufgebracht ist.

## Patentansprüche

1. Formteil (1) zum An- oder Einbau in ein Haushaltgerät, welches zumindest auf einer Sichtseite (F) mit einem Überzug (3) versehen ist, der aus einem Kunststoff enthaltenden Material besteht, welches durch ein Spritzgussverfahren auf einen der Form des Formteils (1) im Wesentlichen entsprechenden Vorformling (2) aufgebracht ist, **dadurch gekennzeichnet, dass** der Vorformling (2) ein Spritzgussteil ist und zumindest eine Fließhilfe und/oder zumindest eine Fließbremse aufweist, welche für eine gleichmäßige Fließfront während des Überspritzens mit einem Kunststoff sorgen, wobei eine Fließhilfe ein Abschnitt ist, an welchem der Überzug (3) eine größere Schichtdicke aufweist als in den benachbarten Abschnitten und wobei eine Fließbremse ein Abschnitt ist, an welchem der Überzug (3) eine geringere Schichtdicke aufweist als in den benachbarten Abschnitten.

2. Formteil (1) nach Anspruch 1, **dadurch gekennzeichnet, dass** die Form des Vorformlings (2) dazu ausgelegt ist, durch ein Spritzgussverfahren überspritzt zu werden.

3. Formteil (1) nach einem der vorhergehenden Ansprüche, **dadurch gekennzeichnet, dass** der Überzug (3) aus einem Dekorkunststoff besteht.

4. Formteil (1) nach einem der vorhergehenden Ansprüche, **dadurch gekennzeichnet, dass** der Überzug (3) aus einem farbigen Kunststoff oder einem Kunststoff mit Metallikoptik besteht.

5. Formteil (1) nach einem der vorhergehenden Ansprüche, **dadurch gekennzeichnet, dass** der Vorformling (2) zumindest teilweise aus einer Kunststoffmasse besteht, welche aus Regranulat hergestellt ist.

6. Formteil (1) nach einem der vorhergehenden Ansprüche, **dadurch gekennzeichnet, dass** der Vorformling (2) eine Einlage (5) aus Metall aufweist.

7. Formteil (1) nach einem der vorhergehenden Ansprüche, **dadurch gekennzeichnet, dass** der Vorformling (2) und der Überzug (3) das gleiche Kunststoffpolymer enthalten.

8. Formteil (1) nach einem der vorhergehenden Ansprüche, **dadurch gekennzeichnet, dass** der Überzug (3) eine geringere Materialstärke als der Vorformling besitzt, insbesondere eine Schichtdicke zwischen 0,5 und 2,0 mm aufweist.

9. Formteil (1) nach einem der Ansprüche 1 bis 8, **dadurch gekennzeichnet, dass** es ein Beschlag für ein Haushaltsgerät ist, insbesondere ein Griffhalter, ein Handgriff, eine Türabschlussleiste oder ein Scharnierelement.

10. Formteil (1) nach einem der Ansprüche 1 bis 8, **dadurch gekennzeichnet, dass** es Teil der Verkleidung eines Haushaltsgeräts ist.

11. Formteil (1) nach einem der Ansprüche 1 bis 8, **dadurch gekennzeichnet, dass** es ein Teil der Innenausstattung eines Haushaltsgerät, insbesondere Kältegeräts, ist, insbesondere eine Zierleiste, ein Türabstellfach, eine Dekorleiste für eine Kühlgut-schale, einen Türabstellfach oder für einen Zwischenboden.

12. Haushaltsgerät, insbesondere Kältegerät, mit einem Formteil (1) nach einem der vorhergehenden Ansprüche.

13. Verfahren zur Herstellung eines Formteils (1) zum An- oder Einbau in ein Haushaltgerät, aufweisend folgende Verfahrensmerkmale:
a) Herstellen einen Vorformlings (2), dessen Form im Wesentlichen der Form des Formteils (1) entspricht;
b) Einsetzen des Vorformlings (2) in einen Formhohlraum einer Spritzform (8a, 8b),
derart dass zumindest auf einer Seite des Vorformlings zwischen dem Formhohlraum und dem Vorformling ein Freiraum für einen Überzug (3) verbleibt;
c) Einspritzen von Spritzmasse aus Kunststoff für den Überzug (3) in den Freiraum;
d) Entfernen des mit dem Überzug (3) versehenen Vorformlings (2) aus der Spritzform (8a, 8b), **dadurch gekennzeichnet, dass** der Vorformling
(2) zumindest eine Fließhilfe und/oder zumindest eine Fließbremse aufweist, welche für eine gleichmäßige Fließfront während des Einspritzens von Spritzmasse aus Kunststoff für den Überzug (3) in den Freiraum sorgen, wobei eine Fließhilfe ein Abschnitt ist, an welchem der Überzug (3) eine größere Schichtdicke aufweist als in den benachbarten Abschnitten und wobei eine Fließbremse ein Abschnitt ist, an welchem der Überzug (3) eine geringere Schichtdicke aufweist als in den benachbarten Abschnitten.

14. Verfahren nach Anspruch 13, **dadurch gekennzeichnet, dass** der Vorformling (2) durch Spritzguss hergestellt wird.

15. Verfahren nach Anspruch 13 oder 14, **dadurch gekennzeichnet, dass** das Formteil (1), der Vorformling (2) und/oder der Überzug (3) gemäß einem der Ansprüche 1 bis 11 ausgebildet ist.

## Claims

1. Moulded piece (1) for assembly on or in a household appliance, which on at least one visible side (F) is provided with a coating (3) which consists of a material containing plastic, which is applied by an injection moulding method to a premoulding (2) substantially corresponding to the shape of the moulded piece (1), **characterised in that** the premoulding (2) is an injection-moulded part and has at least one flow aid and/or at least one flow brake, which provide for a uniform flow front during the overspraying with a plastic, wherein a flow aid is a section on which the coating (3) has a greater layer thickness than in the adjacent sections and wherein a flow brake is a section on which the coating (3) has a lesser layer thickness than in the adjacent sections.

2. Moulded piece (1) according to claim 1, **characterised in that** the shape of the premoulding (2) is designed to be oversprayed using an injection moulding process.

3. Moulded piece (1) according to one of the preceding claims, **characterised in that** the coating (3) consists of a decorative plastic.

4. Moulded piece (1) according to one of the preceding claims, **characterised in that** the coating (3) is made of a coloured plastic or a plastic having a metallic appearance.

5. Moulded piece (1) according to one of the preceding claims, **characterised in that** the premoulding (2) consists at least partially of a plastic mass which is produced from regrind.

6. Moulded piece (1) according to one of the preceding claims, **characterised in that** the premoulding (2) has an insert (5) made of metal.

7. Moulded piece (1) according to one of the preceding claims, **characterised in that** the premoulding (2) and the coating (3) contain the same plastic polymer.

8. Moulded piece (1) according to one of the preceding claims, **characterised in that** the coating (3) has a smaller material thickness than the premoulding, in particular a layer thickness between 0.5 and 2.0 mm.

9. Moulded piece (1) according to one of claims 1 to 8, **characterised in that** it is a fitting for a household appliance, in particular a handle holder, a handle, a door closing strip or a hinge element.

10. Moulded piece (1) according to one of claims 1 to 8, **characterised in that** it is part of the cladding of a household appliance.

11. Moulded piece (1) according to one of claims 1 to 8, **characterised in that** it is a part of the interior of a household appliance, in particular a refrigerator, in particular a decorative strip, a door storage compartment, or a trim bar for a refrigerated goods tray, a door storage compartment or a partition floor.

12. Household appliance, in particular a refrigerator, having a moulded piece (1) according to one of the preceding claims.

13. Method for producing a moulded piece (1) for assembly on or in a household appliance, having the following method features:
a) production of a premoulding (2), the shape of which substantially corresponds to the shape of the moulded piece (1);
b) insertion of the premoulding (2) into a mould cavity of an injection mould (8a, 8b), such that a free space for a coating (3) remains on at least one side of the premoulding between the mould cavity and the premoulding;
c) injection of injection-moulding compound made of plastic for the coating (3) into the free space;
d) removal of the premoulding (2) provided with the coating (3) from the injection mould (8a, 8b), **characterised in that** the premoulding (2) has at least one flow aid and/or at least one flow brake, which provide for a uniform flow front during the injection of injection-moulding compound made of plastic for the coating (3) into the free space, wherein a flow aid is a section on which the coating (3) has a greater layer thickness than in the adjacent sections and wherein a flow brake is a section on which the coating (3) has a lesser layer thickness than in the adjacent sections.

14. Method according to claim 13, **characterised in that** the premoulding (2) is produced by injection moulding.

15. Method according to claim 13 or 14, **characterised in that** the moulded piece (1), the premoulding (2) and/or the coating (3) is formed in accordance with one of claims 1 to 11.

## Revendications

1. Pièce moulée (1) à monter sur ou dans un appareil ménager, laquelle est dotée au moins sur un côté visible (F) d'un revêtement (3) en un matériau contenant du plastique, mis en oeuvre selon un procédé de moulage par injection en une préforme (2) correspondant essentiellement à une forme de la pièce moulée (1), **caractérisé en ce que** la préforme (2) est une pièce moulée par injection et présente au moins un auxiliaire d'écoulement et/ou au moins un frein d'écoulement, lesquels veillent à un front d'écoulement uniforme durant le surmoulage avec un plastique, dans laquelle un auxiliaire d'écoulement est une section sur laquelle le revêtement (3) présente une épaisseur de couche supérieure à celle des sections voisines et dans laquelle un frein d'écoulement est une section sur laquelle le revêtement (3) présente une épaisseur de couche inférieure à celle des sections voisines.

2. Pièce moulée (1) selon la revendication 1, **caractérisée en ce que** la forme de la préforme (2) est dimensionnée afin d'être surmoulée selon un procédé de moulage par injection.

3. Pièce moulée (1) selon l'une des revendications précédentes, **caractérisée en ce que** le revêtement (3) est en un plastique décoratif.

4. Pièce moulée (1) selon l'une des revendications précédentes, **caractérisée en ce que** le revêtement (3) est en un plastique coloré ou en un plastique à aspect visuel métallique.

5. Pièce moulée (1) selon l'une des revendications précédentes, **caractérisée en ce que** la préforme (2) est au moins partiellement en une masse de plastique fabriquée au départ de regranulat.

6. Pièce moulée (1) selon l'une des revendications précédentes, **caractérisée en ce que** là préforme (2) présente un insert (5) en métal.

7. Pièce moulée (1) selon l'une des revendications précédentes, **caractérisée en ce que** la préforme (2) et le revêtement (3) contiennent le même polymère plastique.

8. Pièce moulée (1) selon l'une des revendications précédentes, **caractérisée en ce que** le revêtement (3) présente une épaisseur de matériau inférieure à celle de la préforme, en particulier une épaisseur de couche entre 0,5 et 2,0 mm.

9. Pièce moulée (1) selon l'une des revendications 1 à 8, **caractérisée en ce qu'**elle est une ferrure pour un appareil ménager, en particulier un support de poignée, une poignée, une baguette de finition de porte ou un élément de charnière.

10. Pièce moulée (1) selon l'une des revendications 1 à 8, **caractérisée en ce qu'**elle fait partie de l'habillage d'un appareil ménager.

11. Pièce moulée (1) selon l'une des revendications 1 à 8, **caractérisée en ce qu'**elle est une partie de l'équipement intérieur d'un appareil ménager, en particulier d'un appareil frigorifique, en particulier une moulure, un casier de rangement de porte, une moulure décorative pour un bac à denrées à réfrigérer, un casier de rangement de porte ou pour un fond intermédiaire.

12. Appareil ménager, en particulier appareil frigorifique, avec une pièce moulée (1) selon l'une des revendications précédentes.

13. Procédé de fabrication d'une pièce moulée (1) à monter sur ou dans un appareil ménager, présentant les caractéristiques de procédé suivantes :
a) fabrication d'une préforme (2) dont la forme correspond essentiellement à la forme de la pièce moulée (1) ;
b) mise en place de la préforme (2) dans une cavité moulée d'une forme d'injection (8a, 8b), de telle sorte qu'un espace libre pour un revêtement (3) demeure au moins sur un côté de la préforme entre la cavité moulée et la préforme ;
c) injection de masse à injecter en plastique pour le revêtement (3) dans l'espace libre ;
d) extraction de la préforme (2) pourvue du revêtement (3) de la forme d'injection (8a, 8b), **caractérisé en ce que** la préforme (2) présente au moins un auxiliaire d'écoulement et/ou au moins un frein d'écoulement, lesquels veillent à un front d'écoulement uniforme durant l'injection de masse à injecter en plastique pour le revêtement (3) dans l'espace libre, dans laquelle un auxiliaire d'écoulement est une section sur laquelle le revêtement (3) présente une épaisseur de couche supérieure à celle des sections voisines et dans laquelle un frein d'écoulement est une section sur laquelle le revêtement (3) présente une épaisseur de couche inférieure à celle des sections voisines.

14. Procédé selon la revendication 13, **caractérisé en ce que** la préforme (2) est fabriquée selon un moulage par injection.

15. Procédé selon la revendication 13 ou 14, **caractérisé en ce que** la pièce moulée (1), la préforme (2) et/ou le revêtement (3) est exécuté selon l'une des revendications 1 à 11.
